# EUROPÄISCHE PATENTANMELDUNG

(11) **EP 2 165 978 A1**
(43) Veröffentlichungstag der Anmeldung: **24.03.2010**
(21) Anmeldenummer: 09011871.2
(22) Anmeldetag: 17.09.2009
(51) Int. Cl.: C02F 1/32, C02F 1/78, C01B 13/10, C02F 9/00

(54) **Anlage und Verfahren zur chemischen und physikalischen Aufbereitung von Wasser mittels UV-Strahlung**

(30) Priorität: 19.09.2008 DE 102008048071
(71) Anmelder: SOL-UV Technologie & Entwicklungs-GmbH, 5023 Salzburg (AT)
(72) Erfinder: Polak, Walter, 5020 Salzburg (AT)
(74) Vertreter: Meissner, Bolte & Partner

(57) **Zusammenfassung**

Die Erfindung betrifft eine Anlage zur Aufbereitung von Wasser (W) mit einem Ozon-Generator (3) zur Erzeugung von Ozon (O) durch Ozonierung eines Fluids (L), insbesondere Luft oder Sauerstoff, mittels einer ersten UV-Strahlung zur chemischen Desinfektion des Wassers und einem UV-Reaktor (6) zur physikalischen Desinfektion des Wassers mittels einer zweiten UV-Strahlung, wobei eine Pumpe (2) und ein Venturi-Injektor (35) mit einem Venturi-Rohr zum Durchleiten des aufzubereitenden Wassers (W) und einem Venturi-Injektionsrohr zum gesteuerten Injizieren des in dem Ozon-Generator (3) ozonierten Fluids (L+O) in das durchgeleitete Wasser in Strömungsrichtung vor dem UV-Reaktor (6) vorgesehen sind, wobei die Pumpe (2) zum Drücken des aufzubereitenden Wassers durch das Venturi-Rohr des Venturi-Injektors (35) ausgebildet ist, wobei der Ozon-Generator (3) einen Reflektor (33) zum Reflektieren der erzeugten UV-Strahlung mit einer gewellten Oberfläche zur Erhöhung der Intensität der reflektierten UV-Strahlung für die Ozonierung des Fluids (L) umfasst und wobei der UV-Reaktor (6) zusätzlich zum Erzeugen der ersten UV-Strahlung zur Aufspaltung von Restozon (RO) in Hydroxyl-Radikale für eine weitergehende chemische Desinfektion ausgebildet ist. Weiterhin betrifft die Erfindung ein Verfahren zur Aufbereitung von Wasser unter Verwendung dieser Anlage. Die Erfindung ermöglicht eine umweltschonende, energie- und kostensparende Aufbereitung von Wasser mit hoher Qualität durch chemische und physikalische Desinfektion mittels UV-Strahlung bei gleichzeitiger Wirkungsgradverbessung und unter Vermeidung von unerwünschtem Restozon.

## Beschreibung

Die Erfindung betrifft eine Anlage zur Aufbereitung von Wasser, insbesondere eine Anlage zur chemischen und physikalischen Desinfektion von Wasser mittels UV-Strahlung, gemäß dem Oberbegriff des Anspruchs 1 sowie ein Verfahren zur Aufbereitung von Wasser, insbesondere ein Verfahren zur chemischen und physikalischen Desinfektion von Wasser mittels UV-Strahlung, gemäß dem Oberbegriff des Anspruchs 12.

Ziel der Wasseraufbereitung ist es, eine für den jeweiligen Verwendungszweck erforderliche Wasserqualität sicherzustellen und jedenfalls eine gesundheitliche Gefährdung von Mensch und Tier durch das aufbereitete Wasser zuverlässig auszuschließen. Die verschiedenen Wasserqualitäten werden durch mikrobiologische, chemische und physikalische Grenzwerte definiert und sind Gegenstand einschlägiger Verordnungen und technischer Regelwerke. Bei der Wasseraufbereitung ist damit insbesondere sicherzustellen, dass die Belastung des aufbereiteten Wassers durch Bakterien, Viren, Sporen und Pilze innerhalb der zulässigen Grenzen dauerhaft gewährleistet ist. Die hierzu angewandten Desinfektionsverfahren lassen sich prinzipiell in chemische und physikalische Verfahren unterteilen. Zur Wasseraufbereitung durch chemische Desinfektion zählt etwa die Chlorierung mit Chlor oder Chlordioxid sowie die Beimischung von Wasserstoffperoxid oder Ozon. Als physikalische Desinfektionsverfahren werden das Erhitzen und die UV-Bestrahlung von Wasser bezeichnet.

Ozon (O₃) und Wasserstoffperoxid (H₂O₂) als hochreaktive Oxidationsmittel werden in der Regel erst unmittelbar vor der Beimischung zu dem aufzubereitenden Wasser vor Ort erzeugt, während Chlor oder Chlordioxid problemlos vorgehalten werden und bedarfsweise dem aufzubereitenden Wasser, beispielsweise in einer Bade- oder Schwimmbeckenanlage, zudosiert werden können. Durch Chlorierung aufbereitetes Wasser weist allerdings in der Regel den typischen Chlorgeruch ("Hallenbadgeruch") auf, der durch dabei entstehende Chloramine verursacht wird und als sensorischer Mangel empfunden wird. Zwar entwickelt auch Ozon bei höheren Konzentrationen einen ähnlichen Geruch. Da für die Wasseraufbereitung Ozon aber nur in geringen Konzentrationen erforderlich ist, ist die chemische Desinfektion mit Ozon völlig geruchlos. Dies trifft im Übrigen auch auf den Einsatz von Wasserstoffperoxid zu.

Durch Ozon werden so pathogene Mikroorganismen und organische Spurenstoffe sowie die Präkursoren für Desinfektionsnebenprodukte (DNP, etwa Chloramine) und Trihalogenmethane (THM, etwa Chloroform) oxidativ eliminiert oder deaktiviert. Wasserstoffperoxid wird in der Wasseraufbereitung insbesondere wegen seiner hohen keimtötenden Wirkung und Toxizität für die im aufzubereitenden Wasser enthaltenen Mikroorganismen eingesetzt. Insgesamt ist sowohl Ozon als auch Wasserstoffperoxid geeignet, eine vorhandene Belastung des aufzubereitenden Wassers durch Bakterien, Viren, Sporen und Pilze zu bekämpfen. Zum Zwecke der Wasseraufbereitung werden die zur chemischen Desinfektion vorgesehenen Wirkstoffe über Eintragsmittel in das aufzubereitende Wasser eingebracht und mit diesem in geeigneten Mischvorrichtungen möglichst gleichmäßig vermischt.

Demgegenüber beruht die physikalische Desinfektion von Wasser mittels UV-Strahlung auf einer Spaltung organischer Bindungen und insoweit auf einer unmittelbaren Schädigung der Zellstruktur bzw. DNS und damit auf einer Inaktivierung aller im aufzubereitenden Wasser enthaltenen Mikroorganismen bzw. organischen Stoffe. Damit erfasst die UV-Desinfektion beispielsweise auch pathogene Keime, die gegen spezifische Desinfektionsmittel wie Chlor resistent sind. Ebenso werden Präkursoren eliminiert oder deaktiviert. Durch UV-Strahlung behandeltes Wasser ist zudem sensorisch einwandfrei und weist insoweit keinerlei geruchliche oder geschmackliche Beeinträchtigung auf.

Bei der physikalischen Desinfektion von Wasser mittels UV-Strahlung kommen Wellenlängen im Bereich von etwa 280 bis 100 nm zum Einsatz. Diese sogenannte UV-C-Strahlung wird beispielsweise mit Niederdruck-Quecksilberdampflampen erzeugt, deren Primärstrahlung bei 253,7 nm liegt. Die Wirksamkeit der UV-Desinfektion hängt somit einerseits von der jeweiligen Strahlungsenergie und andererseits von der Eindringtiefe dieser Strahlung in das aufzubereitende Wasser ab. Vorrichtungen zur physikalischen Desinfektion von Wasser mittels UV-Strahlung werden als UV-Reaktoren oder UV-Stufen bezeichnet.

Da UV-Strahlung einer Wellenlänge < 200 nm von molekularem Sauerstoff (O₂) unter Aufspaltung absorbiert wird, können UV-Strahlungsquellen auch für die Ozon-Erzeugung eingesetzt werden. Diese ionisierende Strahlung wird neben der Primärstrahlung als Sekundärstrahlung von den genannten UV-Strahlern erzeugt und kann durch Verwendung von Quarzglas als Lampenglas nutzbar gemacht werden. Bei einer ozonerzeugenden Lampe üblicher Bauart liegt der Anteil der emittierten ionisierenden Sekundärstrahlung von 185 nm bei etwa 10 %, während der Anteil der emittierten Primärstrahlung von 254 nm etwa 90 % beträgt. Wird also ein Fluid, etwa Luft, zur Ozonierung einer derartigen UV-Strahlungsquelle ausgesetzt, erfolgt einerseits eine teilweise Umwandlung des enthaltenen Sauerstoffs in Ozon und andererseits eine physikalische Desinfektion des restlichen Fluids, wie sie vorstehend im Zusammenhang mit Wasser angegeben ist. Die für die Ozonierung eines geeigneten Fluids verwendete Vorrichtung wird als Ozon-Generator bzw. Ozon-Stufe bezeichnet.

Aus dem Stand der Technik sind Verfahren und Vorrichtungen der genannten Art bekannt. Insbesondere ist es aus dem Stand der Technik auch bekannt, Vorrichtungen zur chemischen Desinfektion mit solchen zur physikalischen Desinfektion für die Wasseraufbereitung zu kombinieren. Eine derartige Vorrichtung ist beispielsweise in der DE-A1-198 32 431 offenbart. Danach sind in einem Behälter ein Quarzglasrohr zum Durchströmen mit dem aufzubereitenden Wasser und ein UV-Strahler zur Erzeugung einer bispektralen UV-Strahlung von 254,7 nm für eine physikalische Desinfektion des Wassers in dem Quarzglasrohr und von < 200 nm für eine Ozonerzeugung aus gefilterter Luft in dem Bereich zwischen der Behälterinnenwand und dem Quarzglasrohr angeordnet. Der Ozonerzeugungsbereich des Behälters ist für eine chemische Desinfektion über ein mit einem Rückschlagventil versehenes Verbindungsrohr mit dem wasserführenden Bereich innerhalb des Quarzglasrohrs verbunden. Dabei wird durch einen in dem Ozonerzeugungsbereich relativ zum wasserführenden Bereich innerhalb des Quarzglasrohres höheren Druck und das Verbindungsrohr mit Rückschlagventil zwischen den beiden Bereichen sichergestellt, dass das erzeugte Ozon-Luftgemisch in das aufzubereitende Wasser zur gleichzeitigen chemischen und physikalischen Desinfektion einbringbar ist, ohne dass Wasser aus dem Quarzglasrohr in den Ozonerzeugungsbereich eindringen kann. Mittels eines dem Quarzglasrohr in Strömungsrichtung nachgeordneten Gasabscheiders, der mit einem Aktivkohlefilter verbunden ist, wird zudem gewährleistet, dass überschüssiges Ozon neutralisiert wird. Zwar ist es mit dieser Vorrichtung möglich, eine gegenüber einer ausschließlich chemischen oder physikalischen Wasserdesinfektion verbesserte Qualität des aufbereiteten Wassers zu erzielen. Allerdings ist bei dieser Verfahrens- bzw. Vorrichtungskombination weder eine optimale physikalische noch eine optimale chemische Desinfektion im Hinblick auf Wirkungsgrad, Energieeinsatz und Wirtschaftlichkeit angestrebt noch möglich.

Demgegenüber offenbart die EP-B1-1 340 718 eine Vorrichtung zur kombinierten physikalischen und chemischen Desinfektion von Wasser, die, bei prinzipiell ähnlichem Aufbau wie er in der DE-A1-198 32 431 beschrieben ist, eine Verbesserung der Ozonausbeute, der physikalischen Desinfektion innerhalb eines Quarzglasrohres und der nachfolgenden chemischen Desinfektion mit Ozon ermöglicht. Diese Verbesserungen ergeben sich im Einzelnen aus einer Erhöhung der Strahlungsintensität innerhalb des Quarzglasrohrs und des Ozonerzeugungsbereichs durch eine reflektierende innere Behälterwand aus Aluminium, einen Ozonmischer in Strömungsrichtung nach dem Quarzglasrohr sowie eine Bypassleitung zur Steuerung des Wasserdurchflusses durch das Quarzglasrohr. Auch nach diesem Stand der Technik muss das aus der unter Überdruck dem Ozonerzeugungsbereich des Behälters zugeführten Luft gewonnene überschüssige Ozon bzw. Restozon über einen Gasentlüfter neutralisiert werden. Die angegebenen Maßnahmen eignen sich insoweit zwar den Wirkungsgrad der chemischen und physikalischen Desinfektion bei der Wasseraufbereitung zu verbessern. Eine umweltschonende, energie- und kostensparende Aufbereitung von Wasser mit hoher Qualität durch chemische und physikalische Desinfektion mit UV-Strahlung bei gleichzeitiger Wirkungsgradverbessung und unter Vermeidung von unerwünschtem Restozon ist jedoch damit nicht möglich.

Der Erfindung liegt die Aufgabe zugrunde, eine Anlage zur chemischen und physikalischen Aufbereitung von Wasser mittels UV-Strahlung anzugeben, bei der die genannten Nachteile des Standes der Technik überwunden werden. Insbesondere besteht diese Aufgabe somit darin, eine Anlage anzugeben, die eine weitere Wirkungsgradverbesserung sowohl bei der Ozonerzeugung als auch bei der chemischen und physikalischen Desinfektion des aufzubereitenden Wassers ohne höheren Energieaufwand ermöglicht, bei gleichzeitiger Steuerbarkeit der chemischen wie der physikalischen Desinfektion, um einerseits unmittelbar auf eine Veränderung der Wasserqualität, etwa infolge einer höheren Frequentierung einer Bade- oder Schwimmbeckenanlage, reagieren zu können und um andererseits eine aufwändige Entsorgung von Restozon zu vermeiden oder, mit anderen Worten, insgesamt die Umweltverträglichkeit und Wirtschaftlichkeit der chemischen und physikalischen Aufbereitung von Wasser mittels UV-Strahlung ohne Qualitätsverminderung des aufbereiteten Wassers zu verbessern. Weiterhin ist es Teil der Aufgabe der Erfindung ein Verfahren zur chemischen und physikalischen Aufbereitung von Wasser mittels UV-Strahlung unter Verwendung der erfindungsgemäßen Anlage anzugeben.

Diese Aufgabe wird durch eine Anlage zur Aufbereitung von Wasser mit einem Ozon-Generator zur Erzeugung von Ozon durch Ozonierung eines Fluids, insbesondere Luft oder Sauerstoff, mittels einer ersten UV-Strahlung zur chemischen Desinfektion des Wassers und einem UV-Reaktor zur physikalischen Desinfektion des Wassers mittels einer zweiten UV-Strahlung, die dadurch gekennzeichnet ist, dass eine Pumpe und ein Venturi-Injektor mit einem Venturi-Rohr zum Durchleiten des aufzubereitenden Wassers und einem Venturi-Injektionsrohr zum gesteuerten Injizieren des in dem Ozon-Generator ozonierten Fluids in das durchgeleitete Wasser in Strömungsrichtung vor dem UV-Reaktor vorgesehen sind, wobei die Pumpe zum Drücken des aufzubereitenden Wassers durch das Venturi-Rohr des Venturi-Injektors ausgebildet ist, wobei der Ozon-Generator einen Reflektor zum Reflektieren der erzeugten UV-Strahlung mit einer gewellten Oberfläche zur Erhöhung der Intensität der reflektierten UV-Strahlung für die Ozonierung des Fluids umfasst und wobei der UV-Reaktor zusätzlich zum Erzeugen der ersten UV-Strahlung zur Aufspaltung von Restozon in Hydroxyl-Radikale für eine weitergehende chemische Desinfektion ausgebildet ist.

Lösungsbestandteil der Aufgabe der Erfindung ist auch ein Verfahren zur Aufbereitung von Wasser mit einem Ozon-Generator zur Erzeugung von Ozon durch Ozonierung eines Fluids, insbesondere Luft oder Sauerstoff, mittels einer ersten UV-Strahlung zur chemischen Desinfektion des Wassers und einem UV-Reaktor zur physikalischen Desinfektion des Wassers mittels einer zweiten UV-Strahlung, das dadurch gekennzeichnet ist, dass es unter Verwendung eines Reflektors zum Reflektieren der erzeugten UV-Strahlung mit einer gewellten Oberfläche in dem Ozon-Generator zur Erhöhung der Intensität der reflektierten UV-Strahlung für die Ozonierung des Fluids, einer Pumpe und eines Venturi-Injektors mit einem Venturi-Rohr zum Durchleiten des aufzubereitenden Wassers und einem Venturi-Injektionsrohr zum gesteuerten Injizieren des in dem Ozon-Generator ozonierten Fluids in das durchgeleitete aufzubereitende Wasser in Strömungsrichtung vor dem UV-Reaktor durchgeführt wird und die Verfahrensschritte aufweist: a) Drücken des aufzubereitenden Wassers durch das Venturi-Rohr des Venturi-Injektors mit der Pumpe und gesteuertes Injizieren des in dem Ozon-Generator gleichzeitig unter Verwendung des Reflektors mit der gewellten Oberfläche erzeugten ozonierten Fluids mit dem Venturi-Injektionsrohr des Venturi-Injektors in das aufzubereitende Wasser; b) Weiterleiten des mit dem ozonierten Fluid vermischten Wassers von dem Venturi-Injektor zu dem UV-Reaktor unter chemischem Desinfizieren des aufzubereitenden Wassers mit dem ozonierten Fluid; und c) physikalisches Desinfizieren des aufzubereitenden Wassers in dem UV-Reaktor mittels der zweiten UV-Strahlung und gleichzeitige Aufspaltung des Restozons in Hydroxyl-Radikale mittels der ersten UV-Strahlung sowie weitergehendes chemisches Desinfizieren des aufzubereitenden Wassers in dem UV-Reaktor.

Insbesondere bei Bade- und Schwimmanlagen ist es vorteilhaft, als Fluid für die Ozonierung in dem Ozon-Generator gefilterte Umgebungsluft zu verwenden. Dazu ist der Einlassöffnung des von dem Ozon-Generator umfassten ersten Behälters ein Luftfilter in fluidmechanischer Verbindung vorgeschaltet. Alternativ kann als Fluid für die Ozonierung reiner Sauerstoff eingesetzt werden.

Durch die erfindungsgemäße Ausbildung des Ozon-Generators als separate Komponente in Verbindung mit den weiteren erfindungsgemäßen Anlagenkomponenten wird zum einen der Wirkungsgrad der Ozonerzeugung wesentlich gesteigert und zum anderen die Ozonerzeugung steuerbar, so dass auf wechselnde Qualitäten des aufzubereitenden Wassers unmittelbar durch Anpassung der erforderlichen Ozonmenge reagiert werden kann und insoweit eine Überproduktion von Ozon vermeidbar ist, wodurch auch die nach dem Stand der Technik erforderlichen Filtermittel zur Neutralisation des Restozons wegfallen. Darüber hinaus wird der Wirkungsgrad der chemischen Desinfektion gesteigert, indem das bei der oxidativen Aufbereitung des Wassers in der Mischvorrichtung nicht verbrauchte Ozon im UV-Reaktor in Hydroxyl-Radikale umgewandelt wird, welche eine weitergehende chemische Desinfektion des aufzubereitenden Wasser bewirken. Eine derartige bedarfgesteuerte Bereitstellung und Verwendung von Ozon unter gleichzeitiger Lösung des Restozonproblems ist im Stand der Technik nicht offenbart.

Nach dem Stand der Technik ist der Wirkungsgrad bei der Ozonerzeugung sehr gering. So beträgt er etwa lediglich 5 % bei der sogenannten stillen Entladung, der Erzeugung von Ozon durch Dissoziation von Sauerstoff mittels Hochspannung. Zwar ist durch die bekannte Ozonierung mittels UV-Strahlung demgegenüber eine Wirkungsgradverbesserung zu erzielen, die jedoch einerseits einem höheren Energieaufwand geschuldet ist und anderseits jedenfalls nicht gezielt steuerbar ist. Nach der Erfindung wird die Wirkungsgradverbesserung durch eine spezifische Vergrößerung und Ausbildung der Reflektorfläche innerhalb des Ozon-Generators ermöglicht. Durch die Wellenform der Reflektorfläche und deren im Wesentlichen konzentrische Ausbildung um die Strahlungsquelle herum wird die gesamte von der UV-Strahlungsquelle erzeugte Strahlung in definierter Weise in den Bereich zwischen Reflektor und Strahlungsquelle gelenkt, in dem wiederum die Ozonierung erfolgt. Demgegenüber ist die Reflektorfläche nach dem Stand der Technik eben bzw. in der Form einer glatten inneren Zylindermantelfläche ausgebildet, was in jedem Fall eine Totalreflexion einer von einer relativ dazu zentrisch angeordneten UV-Strahlungsquelle ausgehenden Strahlung zur Folge hat und eben nicht eine Maximierung der Strahlungsintensität in dem Bereich, in dem die Ozonierung erfolgt. Die Strahlungsintensität innerhalb dieses Bereichs wird erfindungsgemäß zusätzlich durch eine geeignete Materialauswahl für den Reflektor bzw. die Reflektorfläche sowie eine geeignet Wahl der Oberflächenrauigkeit erhöht.

Wie Versuche zeigten, ist es durch die gewellte Ausbildung der Reflektorfläche und deren damit bewirkte Vergrößerung möglich, mit einer 100 W-UV-Lampe eine Strahlungsintensität im Ozonierungsbereich des erfindungsgemäß ausgebildeten Ozon-Generators zu erzielen, die der einer 200 W-UV-Lampe in einem entsprechenden Ozon-Generator mit konventioneller bzw. ebener Reflektorfläche entspricht. Somit wird durch die erfindungsgemäße Ausgestaltung des Reflektors eine energiesparende und kostengünstige bzw. ökonomische Erzeugung von Ozon mit hohem Wirkungsgrad ermöglicht.

Der Eintrag des in dem Ozon-Generator erzeugten Ozon-Fluid-Gemisches in das aufzubereitende Wasser erfolgt über das Venturi-Injektionsrohr und das Venturi-Rohr eines Venturi-Injektors. Der Venturi-Injektor umfasst ein als Venturi-Rohr bezeichnetes glattwandiges Rohrstück, das im Innern in der Form zweier einander gegenüberliegender Trichter verjüngt ist und das an der Stelle des geringsten Rohrdurchmessers mit einem im Wesentlichen normal dazu vorgesehenen sogenannten Abnahme- oder Venturi-Injektionsrohr fluidmechanisch verbunden ist. In bekannter Weise entsteht damit beim Fluiddurchtritt durch das Venturi-Rohr am Venturi-Injektionsrohr ein Differenzdruck, der zum Ansaugen des Ozon-Luftgemisches aus dem Ozon-Reaktor genutzt wird. Hierzu ist eine minimale Druckdifferenz von etwa 16 % ausreichend, um die gewünschte Funktion des Venturi-Injektors bzw. des Venturi-Systems sicherzustellen.

Ein besonderer Vorteil des Venturi-Injektors ergibt sich insoweit dadurch, dass auch nach Abschalten der UV-Strahlungsquelle in dem Ozon-Generator der Venturi-Injektor weiterhin in Funktion bleibt, da er so lange Luft ansaugt wie das Venturi-Rohr von Wasser durchströmt wird. Durch den somit von der Ozonerzeugung unabhängigen Lufteintrag in das aufzubereitende Wasser wird eine zusätzliche Stripping-Funktion in der erfindungsgemäßen Anlage bereitgestellt. So ist es beispielsweise in einer Bade- oder Schwimmanlage möglich, über Nacht, wenn kein Badebetrieb herrscht, auf die Ozon-Produktion zu verzichten, ohne gleichzeitig auch auf die physikalische Reduktion von Desinfektionsnebenprodukten verzichten zu müssen, die allein schon durch den Lufteintrag mittels des Venturi-Injektors durch Umwälzen des aufzubereitenden Wassers erfolgt. Das wiederum führt zu einer besonders wirtschaftlichen und kostengünstigen Verfahrensführung durch geringere Energiekosten und geringeren Wartungsaufwand beim Betrieb des Ozon-Generators, und zwar ohne jegliche Verminderung der Qualität des aufbereiteten Wassers.

Vorteilhafte Weiterbildungen der erfindungsgemäßen Anlage zur Aufbereitung von Wasser sind in den abhängigen Ansprüche 2 bis 11 angegeben. Diese Weiterbildungen werden nachfolgend im Einzelnen unter Angabe der jeweiligen weiteren Vorteile sowie unter Einbeziehung der korrespondierenden vorteilhaften Ausführungsformen des erfindungsgemäßen Verfahrens zur Aufbereitung von Wasser nach den abhängigen Ansprüchen 13 bis 15 näher erläutert:

Bevorzugt ist die Pumpe als Umwälzpumpe bzw. Saug-Druckpumpe mit einem Steuerungsmittel zur Steuerung der Drehzahl und damit der Strömungsgeschwindigkeit des aufzubereitenden Wassers durch den Venturi-Injektor ausgebildet. Gleichermaßen kann es fallweise bevorzugt sein, statt lediglich einer Steuerung des Wasserflusses mittels der Pumpe, diese in ein Regelsystem für die gesamte Wasseraufbereitungsanlage zu integrieren. Somit ist der Eintrag des in dem Ozon-Generator ozonierten Fluids in das aufzubereitende Wasser mit dem Venturi-Injektor mittelbar über die Drehzahl der Pumpe steuerbar. Darüber hinaus ist es von Vorteil, den Eintrag des ozonierten Fluids bzw. Ozon-Luftgemisches aus dem Ozon-Generator zusätzlich direkt und insoweit unmittelbar über ein in der fluidmechanischen Verbindung zwischen dem Behälterauslass des Ozon-Generators und dem Venturi-Injektionsrohr des Venturi-Injektors vorgesehenes Steuerventil zu steuern. Bevorzugt ist hierbei die Verwendung eines Kunststoffabsperrventils, mit dem das durch den Ozon-Generator hindurchströmende Fluidvolumen zwischen 25 und 100 % einstellbar ist, was wiederum eine entsprechend exakte Steuerung der Ozon-Erzeugung ermöglicht. Fallweise kann das Steuerventil auch vorteilhaft in eine Regelung der Gesamtanlage einbezogen sein.

Für die Anwendung der erfindungsgemäßen Anlage in einer Bade- und Schwimmbeckenanlage ergibt sich daraus der Vorteil, dass, wenn kein Badebetrieb herrscht, der Ozonanteil im Luft-Wasser-Gemisch erhöht werden kann, um so die Desinfektion zum Zwecke einer kurzfristigen Säuberung zu verstärken, so dass bei Wiederaufnahme des Badebetriebs die erforderliche Wasserqualität gewährleistet ist, ohne jegliche Beeinträchtigung, etwa geruchlicher Art, für die Badegäste.

Bevorzugt umfasst der Ozon-Generator einen zylinderförmigen ersten Behälter oder allgemeiner, einen ersten symmetrischen Behälter, zum Hindurchleiten des Fluids. In dem ersten Behälter ist wenigstens eine erste UV-Strahlungsquelle zum Erzeugen wenigstens der ersten UV-Strahlung für die Ozonierung des Fluids vorgesehen. Die wenigstens eine erste UV-Strahlungsquelle ist dabei vorteilhafterweise im Bereich der Zylinderlängsachse oder allgemeiner, einer ersten Symmetrieachse des symmetrischen Behälters, vorgesehen. Zur Erhöhung der Intensität der reflektierten UV-Strahlung in dem Bereich zwischen der Zylinderlängsachse und der Innenwand des ersten Behälters - und somit zur Erhöhung der Ozonausbeute - ist die Innenwand des ersten Behälters als Reflektor mit der gewellten Oberfläche ausgebildet. Bei dem zylinderförmigen ersten Behälter ist zudem eine Einlassöffnung an der ersten Stirnseite und eine Auslassöffnung an der zweiten Stirnseite für das Hindurchleiten des Fluids vorgesehen. Wenngleich die Zylinderform für den ersten Behälter bevorzugt ist, kann der erfindungsgemäße Ozon-Generator auch andere vorteilhafte symmetrische Behälterformen umfassen.

Zum Erzeugen der ersten UV-Strahlung in dem Ozon-Generator ist wenigstens eine erste UV-Strahlungsquelle vorgesehen. Diese emittiert die für die Ozonierung des ersten Fluids erforderliche erste UV-Strahlung einer Wellenlänge von etwa 100 bis 200 nm, insbesondere die besonders bevorzugte Wellenlänge von etwa 185 nm. Um neben der Ozonierung des ersten Fluids gleichzeitig auch dessen physikalische Desinfektion zu ermöglichen, ist es bevorzugt, dass jede erste Strahlungsquelle zudem die zweite UV-Strahlung einer Wellenlänge von etwa 240 bis 280 nm, insbesondere die besonders bevorzugte Wellenlänge von etwa 254 nm, erzeugt. Grundsätzlich können hierfür alle konventionellen UV-Strahler mit entsprechendem Emissionsspektrum in vorteilhafter Weise eingesetzt werden. Bevorzugt ist jedoch die Verwendung von UV-Niederdruckstrahlern.

Vorteilhaft an dem erfindungsgemäßen Ozon-Generator ist schließlich sein modularer Aufbau, der auch eine von einem Gesamtwasseraufbereitungssystem im öffentlichen oder privaten Bereich getrennte Verwendung als Nachrüstkomponente für bestehende Wasseraufbereitungsanlagen ermöglicht.

Die von der inneren Behälterwand des Ozon-Generators umfasste Reflexionsfläche ist durch die gewellte Ausbildung bevorzugt um etwa 50 bis 150 % gegenüber einer entsprechenden eben ausgebildeten Reflexionsfläche vergrößert, wodurch sich die Strahlungsintensität der reflektierten UV-Strahlung innerhalb des Ozonierungsbereichs des Ozon-Generators in überraschender Weise wesentlich erhöht. Dieser Ozonierungsbereich ist zwischen der ersten Symmetrieachse und der Innenwand des ersten Behälters ausgebildet und umfasst insoweit im Falle eines zylindrischen Behälters den Bereich zwischen der Zylinderlängsachse und der Zylindermantelfläche. Die gewellte Reflexionsfläche ist bevorzugt in Form von geraden Wellen mit gerundeten oder spitz zulaufenden Wellentälern und Wellenbergen ausgebildet, weist also das Muster von sich in einer bestimmten Richtung bewegenden langen, geraden und parallel ausgerichteten Wellen auf. Im Falle eines zylinderförmigen Behälters ist aus fertigungstechnischen Gründen eine parallele Ausrichtung dieses Wellenmusters zur Zylinderlängsachse besonders vorteilhaft. Gleichermaßen vorteilhaft im Hinblick auf eine Wirkungsgradsteigerung bei der Ozonierung ist selbstverständlich auch jede andere Ausrichtung dieses Wellenmusters in Bezug auf die erste Symmetrieachse des ersten Behälters.

Eine weitergehende Erhöhung der UV-Strahlungsintensität im Ozonierungsbereich des Ozon-Generators wird durch die Auswahl eines geeigneten Materials sowie einer geeigneten Oberflächengüte des Reflektors ermöglicht. Bevorzugt ist der Reflektor aus Aluminium mit glatter und insbesondere polierter Oberfläche gefertigt. Vorteilhaft kann beispielsweise auch eine erfindungsgemäß geformte Reflektorfläche aus aluminiumbeschichtetem Stahlblech (Alusil) eingesetzt werden. Bevorzugt ist es allerdings, die Reflexionsfläche entweder ganz aus Aluminium zu fertigen und diese nach Ausbildung der Wellenform zu polieren oder eine entsprechend gewellte Grundstruktur, etwa aus Kunststoff, mit Aluminium zu beschichten und diese Aluminiumschicht zu polieren. Durch diese Ausgestaltung der Reflexionsfläche können nahezu 100 % der von einer UV-Strahlungsquelle des Ozon-Generators erzeugten UV-Strahlung zur Ozonierung des Fluids beitragen, was gegenüber dem Stand der Technik eine wesentliche Wirkungsgradverbesserung darstellt. Der so ausgebildete Ozon-Generator weist zudem eine sehr gute Wärmeabstrahlung auf. Da bekanntermaßen die Ozonerzeugung mit zunehmender Temperatur innerhalb des Ozon-Generators abnimmt, ermöglicht die gute Wärmeabstrahlung des erfindungsgemäßen Ozon-Generators eine weitergehende Wirkungsgradsteigerung bei der Ozonerzeugung. Mit anderen Worten: für eine maximale Ozon-Produktion ist ein minimaler Energieaufwand erforderlich, was wiederum eine äußerst wirtschaftliche und umweltschonende Verfahrensführung ermöglicht.

Für ein weitergehendes Vermischen unter chemischem Desinfizieren des aufzubereitenden Wassers mit dem ozonierten Fluid ist in Strömungsrichtung zwischen dem Venturi-Injektor und dem UV-Reaktor vorzugsweise eine Mischvorrichtung vorgesehen. Überraschenderweise hat es sich gezeigt, dass Mischvorrichtungen mit einer wirksamen Reaktionsstrecke von wenigsten etwa 2,20 m, bevorzugt wenigstens etwa 2,30 m, eine besonders effektive chemische Desinfektion des aufzubereitenden Wassers ermöglichen. Mit wirksamer Reaktionsstrecke ist die freie Fließstrecke des aufzubereitenden Wassers zu verstehen, innerhalb der das damit vermischte Ozon seine oxidative Wirkung entfalten kann und die insoweit einer bevorzugten Einwirkdauer entspricht. Bevorzugt ist diese wirksame Reaktionsstrecke in Form eines Reaktionsrohres der genannten Länge oder eines Reaktionsfasses, das durch Umlenkmittel einen entsprechend langen Strömungspfad einschließt, verwirklicht. Die Mischvorrichtung stellt insoweit auch eine weitergehende Verwirbelung des ozonierten Fluids bzw. Ozon-Luftgemisches in dem aufzubereitenden Wasser in Ergänzung zu dem Venturi-Injektor sicher.

Grundsätzlich kann jede herkömmliche UV-Stufe als UV-Reaktor in der erfindungsgemäßen Anlage betrieben werden. Bevorzugt ist allerdings die Verwendung eines sogenannten Dünnschicht-UV-Reaktors. Dieser zeichnet sich dadurch aus, dass das aufzubereitende Wasser in einer dünnen Schicht innerhalb des Reaktorbehälters an der in einem Quarz-Tauchrohr angeordneten UV-Strahlungsquelle vorbeigeführt wird. Dadurch ist es möglich, die Absorption der UV-Strahlung im Wasser zu minimieren und die desinfizierende Wirkung der UV-Strahlung zu maximieren. Mit der damit auch nutzbaren kurzwelligeren Sekundärstrahlung wird die Aufspaltung des in dem aufzubereitenden Wasser beim Durchtritt durch den UV-Reaktor noch enthaltenen Restozons in Hydroxyl-Radikale ermöglicht. Dies führt zu einer weiteren Wirkungsgradsteigerung bei der erfindungsgemäßen chemischen Desinfektion und löst gleichzeitig auf vorteilhafte Weise das Restozon-Problem.

Der Dünnschicht-UV-Reaktor ist im Einzelnen bevorzugt mit einem zylindrischen zweiten Behälter und mit wenigstens einer zweiten UV-Strahlungsquelle in einem Quarz-Tauchrohr innerhalb des zweiten Behälters ausgebildet, wobei das Quarz-Tauchrohr und der zweite Behälter konzentrisch so angeordnet sind, dass zwischen ihnen lediglich ein schmaler Spalt - der Wasserdurchtrittsbereich - für das Durchleiten des Wassers durch den UV-Reaktor verbleibt. Bevorzugt ist die Spaltbreite dabei an die Eindringtiefe der ersten UV-Strahlung, der Sekundärstrahlung, angepasst. Jede von dem UV-Reaktor umfasste zweite UV-Strahlungsquelle ist zum Emittieren der zweiten UV-Strahlung, der Primärstrahlung einer Wellenlänge von etwa 240 bis 280 nm, und besonders bevorzugt von etwa 254 nm, für die physikalische Desinfektion des durch den UV-Reaktor hindurchtretenden Wassers ausgebildet. In Verbindung mit dem Quarz-Tauchrohr, das für die von jeder zweiten Strahlungsquelle gleichzeitig emittierten ersten UV-Strahlung bzw. Sekundärstrahlung einer Wellenlänge von etwa 100 bis 200 nm, und besonders bevorzugt von etwa 185 nm, durchlässig ist, ermöglicht die durch den Spalt definierte geringe Dicke der zu bestrahlenden Wasserschicht somit die gewünschte Bildung von OH-Radikalen für die gleichzeitige weitergehende chemische Desinfektion des Wassers in dem Wasserdurchtrittsbereich.

So wird durch die Anlage und das Verfahren nach der Erfindung in vorteilhafter Weise (a) eine direkte Reaktion des Ozons mit den Wasserinhaltsstoffen, (b) eine vollständig Nutzung der erzeugten UV-Strahlung und (c) eine vollständige Nutzung des erzeugten Ozons durch Umwandlung des Restozons in Hydroxyl-Radikale gewährleistet. Besonders letzteres erweist sich dabei als vorteilhaft, da OH-Radikale eine um etwa 25 % höhere Desinfektionswirkung aufweisen als Ozon und insoweit die Beseitigung von zusätzlichen unerwünschten Wasserinhaltsstoffen ermöglicht wird. Darüber hinaus bewirkt die erste UV-Strahlung bzw. Sekundärstrahlung in der dünnen Wasserschicht innerhalb des UV-Reaktors zusätzlich die Aufspaltung von Wassermolekülen in weitere OH-Radikale, was zu einer nochmaligen Wirkungsgradverbesserung der chemischen Desinfektion im Rahmen der Erfindung beiträgt. So stellt sich der erfindungsgemäß erzielbare überraschend hohe Wirkungsgrad bei der Wasseraufbereitung als Ergebnis eines vorteilhaften Zusammenwirkens einer Vielzahl von Anlagen- und Verfahrensparametern dar.

Eine zusätzliche vorteilhafte Weiterbildung der Erfindung ergibt sich aus der Verwendung eines Metallkatalysators im wasserführenden Bereich des UV-Reaktors. Dadurch wird eine Umwandlung des Restozons in Wasserstoffperoxid ermöglicht, und mithin eine weitere Verbesserung des Wirkungsgrads der gleichzeitigen weitergehenden chemischen Desinfektion innerhalb des UV-Reaktors bewirkt. Besonders bevorzugt ist hierbei die Verwendung von Titan oder Titandioxyd als Katalysator. Die Verwendung eines Metallkatalysators, insbesondere eines Titan- oder Titandioxydkatalysators ist ausdrücklich nicht auf die besonders bevorzugte Ausführungsform des Dünnschicht-UV-Reaktors beschränkt, sondern ist in jedem für das erfindungsgemäße Verfahren per se geeigneten UV-Reaktor von gleichermaßen vorteilhafter Wirkung. Beispielsweise kann ein derartiger Katalysator als separates Bauteil, etwa in Stab- oder Gitterform, im Wasserdurchtrittsbereich des UV-Reaktors vorteilhaft vorgesehen sein. Die verschiedenen Ausführungsformen können vollständig aus dem Katalysatormaterial gebildet sein oder dieses nur anteilig enthalten, etwa einer Beschichtung eines separaten Kunststoffteils. Auch ist es bevorzugt, den Katalysator als Beschichtung direkt auf der inneren Oberfläche des von dem UV-Generator umfassten zweiten Behälters vorzusehen, also etwa die Innenwand des zweiten Behälters mit einer Titandioxid-Beschichtung zur katalytischen Reduktion von unerwünschten Wasserinhaltsstoffen auszubilden.

Schließlich besteht eine vorteilhafte Weiterbildung der Erfindung auch in einer unmittelbaren räumlichen Zuordnung der wesentlichen Anlagenkomponenten, wodurch insbesondere eine Verschiebung des Einsatzgebietes der Erfindung vom öffentlichen in den privaten Sektor ermöglicht wird. Hierbei sind der Ozon-Generator und der UV-Reaktor in einem gemeinsamen Behälter, der vorzugsweise in Zylinderform ausgebildet ist, mit wenigstens einer bispektralen UV-Strahlungsquelle zum Erzeugen der ersten und zweiten UV-Strahlung angeordnet. Die innere Behälterwand ist dabei bevorzugt, wie vorstehend angegeben, gewellt zur Reflexion der erzeugten UV-Strahlung ausgebildet und weist darüber hinaus zusätzlich mit Katalysatorwerkstoff beschichtete Bereiche zur Erzielung des katalytischen Effektes auf. Bevorzugt besteht diese Metallbeschichtung aus Titan oder Titandioxid. Neben der wenigstens einen bispektralen UV-Strahlungsquelle, die wiederum entlang einer ersten Symmetrieachse des Behälters angeordnet ist, vorzugsweise entlang der Zylinderlängsachse, umfasst der Behälter ein Quarzglasrohr, durch welches das aufzubereitende Wasser innerhalb des Behälters führbar ist. Der von der Behälterinnenwand und dem Quarzglasrohr begrenzte Behälterbereich ist als Ozonierungsbereich für die Ozonierung eines geeigneten Fluids vorgesehen, das beim Betrieb der Vorrichtung den Behälter in Richtung der ersten Symmetrieachse durchströmt. Als Fluid wird bevorzugt gefilterte Umgebungsluft verwendet. Zum Transport des aufzubereitenden Wassers durch das Quarzglasrohr ist ein geeignetes Umwälzmittel, bevorzugt eine Umwälzpumpe, in der Zulaufleitung des Quarzglasrohrs vorgesehen. Der Eintrag des ozonierten Fluids in das aufzubereitende Wasser erfolgt mittels des Venturi-Rohrs eines Venturi-Injektors, während das Venturi-Injektionsrohr des Venturi-Injektors in der Zulaufleitung zwischen dem Umwälzmittel und dem Quarzglasrohr fluidmechanisch mit dem Auslass des Ozonierungsbereichs verbunden ist. Auf diese Weise wird das aufzubereitende Wasser in der erfindungsgemäßen Weise vor Eintritt in das Quarzglasrohr, bzw. in den UV-Reaktor, mit dem ozonierten Fluid vermischt. Als Mischvorrichtung dient hierbei bevorzugt das zwischen dem Venturi-Injektionsrohr und dem Einlass des Quarzglasrohrs in der erforderlichen wirksamen Länge ausgebildete Leitungsstück. Im Quarzglasrohr bzw. UV-Reaktor wird das Ozon in Hydroxyl-Radikale und, mittels des Metallkatalysators, in Wasserstoffperoxid verwandelt. Am Auslass des Quarzglasrohrs steht das aufbereitete Wasser zu Verwendung bereit. Durch fluidmechanische Kopplung der Zulaufleitung und des Auslasses des Quarzglasrohrs mit einem ersten Wasserspeicher entsteht ein erster Wasserkreislauf.

Alternativ ist es möglich, zwischen der Behälterinnenwand und dem Quarzglasrohr den UV-Reaktor, durch den das aufzubereitende Wasser in der angegebenen Weise geleitet wird, und innerhalb des Quarzglasrohrs den Ozon-Generator, durch den das zu ozonierende Fluid - bevorzugt Umgebungsluft - strömt, auszubilden. Nach dieser bevorzugten Ausführungsart ist wenigstens eine bispektrale UV-Strahlungsquelle zum Erzeugen der ersten (100 bis 200 nm) und zweiten UV-Strahlung (240 bis 280 nm) exzentrisch im Quarzglastauchrohr bzw. Quarzglasrohr in paralleler Anordnung mit einem dünnen, beschichteten Metallkatalysatorstab der angegebenen Art vorgesehen. Zur Unterstützung der Fluidströmung innerhalb des Quarzglasrohres ist zusätzlich eine Membranpumpe vorgesehen. Der Eintrag des ozonierten Fluids in den UV-Reaktorbereich des Behälters erfolgt in der vorstehend angegebenen Weise mittels eines Venturi-Injektors. Auch diese bevorzugte Anordnung ermöglicht eine Wasseraufbereitung mittels Ozon und UV-Strahlung unter Verbesserung des Wirkungsgrades.

Durch die Verwendung konventioneller UV-Strahlungsquellen in dem erfindungsgemäßen Ozon-Generator und UV-Reaktor können auch die üblicherweise zum Betrieb von Ozon-Stufen und UV-Stufen jeweils eingesetzten Ansteuereinheiten zum Betrieb des Ozon-Generators und des UV-Reaktors verwendet werden. Damit ist es aber in vorteilhafter Weise auch möglich, für die Ansteuerung jeder ersten UV-Strahlungsquelle in dem Ozon-Generator und jeder zweiten UV-Strahlungsquelle in dem UV-Reaktor eine gemeinsame derartige Ansteuereinheit zu verwenden. So ist es auf vorteilhafte Weise möglich, die erste UV-Strahlung mit einer Wellenlänge von etwa 100 bis 200 nm, insbesondere von etwa 185 nm, zur Ozonierung des ersten Fluids und zur gleichzeitigen Aufspaltung des Restozons in Hydroxyl-Radikale für die weitergehende chemische Desinfektion sowie die zweite UV-Strahlung mit einer Wellenlänge von etwa 240 bis 280 nm, insbesondere von etwa 254 nm, zur gleichzeitigen physikalischen Desinfektion des ersten Fluids und des Wassers mit nur einer konventionellen Ansteuereinheit zu erzeugen, mithin eine Ansteuereinheit einzusparen.

Die Bereitstellung des aufzubereitenden Wassers erfolgt vorzugsweise in einem ersten Wasserspeicher. Als solcher ist im Falle einer Bade- oder Schwimmbeckenanlage der Schwallwasserbehälter vorgesehen. Die zur Strömungserzeugung in dem Venturi-Rohr des erfindungsgemäßen Venturi-Injektors vorgesehene Pumpe wird bevorzugt auch zur Entnahme des aufzubereitenden Wassers aus dem ersten Wasserspeicher eingesetzt und ist insoweit zwischen dem ersten Wasserspeicher und dem Venturi-Rohr des Venturi-Injektors angeordnet. Dieser erste Wasserspeicher dient zudem bevorzugt zum Zwischenspeichern des aus dem UV-Reaktor austretenden aufbereiteten Wassers. Mit anderen Worten: durch die erfindungsgemäße fluidmechanische Zuordnung der einzelnen Anlagenkomponenten wird ein permanenter Wasserkreislauf ermöglicht, der im Falle einer Bade- oder Schwimmbeckenanlage ausschließlich unter Einbeziehung des Schwallwasserbehälters, und insoweit ausschließlich innerhalb einer Vorstufe, stattfindet und damit unabhängig von anderen üblicherweise in einem Badewasserkreislauf vorgesehenen Wasseraufbereitungsmaßnahmen ist. Zum steuerbaren Umwälzen des Wassers in diesem ersten Wasserkreislauf wird vorzugsweise die angegebene Umwälzpumpe bzw. Saug-Druckpumpe verwendet. Durch eine entsprechende Steuerung der Umwälzpumpe ist ein kontinuierlicher wie ein diskontinuierlicher Wassertransport innerhalb dieses Kreislaufes möglich. Anstelle einer reinen Steuerung kann auch in vorteilhafter Weise eine Regelung des Wassertransports durch den ersten Wasserspeicher vorgesehen sein.

Der erste Wasserspeicher ist in vorteilhafter Weise zusätzlich mit einem dritten Einlass zur Zufuhr von Frischwasser bzw. Rohwasser ausgebildet. Dies hat etwa im Zusammenhang mit einer Bade- oder Schwimmbeckenanlage den Vorteil, dass das erfindungsgemäße Verfahren neben der Aufbereitung von abgebadetem Wasser auch eine Frischwasseraufbereitung einschließt, für die folglich eine separate Aufbereitung entfallen kann. Insbesondere wird es dadurch möglich, Frischwasser unterschiedlichen Ursprungs, und damit schwankender Qualität, in ein und derselben Anlage aufzubereiten und so eine eventuelle Verschmutzung des Beckenwassers durch das frisch zugeführte Wasser zu verhindern.

Zum Zusammenwirken mit einem anderen wasserführenden System umfasst der erste Wasserspeicher bevorzugt einen ersten Einlass und einen ersten Auslass. Über diesen ersten Einlass und den für die Frischwasserzuleitung vorgesehenen dritten Einlass wird somit das innerhalb des ersten Wasserkreislaufs aufzubereitende Wasser bereitgestellt.

Die Entnahme des aufbereiteten Wassers aus dem ersten Wasserbehälter erfolgt bevorzugt über den ersten Auslass. Somit ist die Versorgung eines zweiten Wasserspeichers mit aufbereitetem Wasser über den ersten Auslass des ersten Wasserspeichers und der Eintrag von aufzubereitendem Wasser aus dem zweiten Wasserspeicher in den ersten Wasserspeicher unter Ausbildung eines zweiten Wasserkreislaufs gewährleistet. Im Falle einer Bade- oder Schwimmbeckenanlage umfasst dieser zweite Wasserkreislauf den Schwallwasserbehälter, eine Wasserzufuhrleitung zwischen dem ersten Auslass des Schwallwasserbehälters und dem Becken, das Bade- oder Schwimmbecken sowie eine Überlaufrinne zwischen dem Becken und dem ersten Einlass des Schwallwasserbehälters. Der Wassertransport aus dem und in den Schwallwasserbehälter innerhalb des zweiten Wasserkreislaufs ist so entweder durch eine Pumpe oder durch die hydraulischen Gegebenheiten vor Ort ohne jegliche Beeinflussung durch die erfindungsgemäße Wasseraufbereitung möglich.

Zusammenfassend ist die erfindungsgemäße Anlage somit bevorzugt zwischen einem zweiten Auslass und einem zweiten Einlass eines ersten Wasserspeichers zum Bereitstellen des aufzubereitenden und zum Speichern des aufbereiteten Wassers vorgesehen und umfasst in Strömungsrichtung des aufzubereitenden Wassers eine Pumpe, einen Venturi-Injektor mit einem Venturi-Rohr zum Durchleiten des aufzubereitenden Wassers und einem Venturi-Injektionsrohr zum gesteuerten Injizieren des in dem Ozon-Generator ozonierten Fluids in das durchgeleitete Wasser, eine Mischvorrichtung und einen UV-Reaktor in jeweils fluidmechanischer Verbindung unter Ausbildung eines ersten Wasserkreislaufs. Dabei ist die Pumpe zum Saugen des Wassers aus dem ersten Wasserspeicher und zum Drücken des angesaugten Wassers durch das Venturi-Rohr des Venturi-Injektors vorgesehen. Der Ozon-Generator umfasst hierbei einen symmetrischen ersten Behälter zum Hindurchleiten des Fluids, wenigstens eine erste UV-Strahlungsquelle zum Erzeugen wenigstens der ersten UV-Strahlung für die Ozonierung des Fluids in dem ersten Behälter und einen Reflektor zum Reflektieren der erzeugten UV-Strahlung in Form der Innenwand, wobei die oder jede erste UV-Strahlungsquelle im Bereich einer ersten Symmetrieachse des Behälters vorgesehen ist und die Innenwand des ersten Behälters mit einer gewellten Oberfläche zur Erhöhung der Intensität der reflektierten UV-Strahlung in dem Bereich zwischen der ersten Symmetrieachse und der Innenwand des ersten Behälters ausgebildet ist. Der Ozon-Generator ist dabei fluidmechanisch über das Venturi-Injektionsrohr des Venturi-Injektors mit dem ersten Wasserkreislauf zum gesteuerten Injizieren des ozonierten Fluids verbunden. Zur Aufspaltung von Restozon in Hydroxyl-Radikale für eine weitergehende chemische Desinfektion schließlich ist die oder jede zweite UV-Strahlungsquelle des UV-Reaktors zusätzlich zum Erzeugen der ersten UV-Strahlung - neben der zweiten UV-Strahlung - ausgebildet.

Diese bevorzugte Anlage ermöglicht schließlich die vorteilhafte Durchführung des erfindungsgemäßen Verfahrens mit den aufeinander folgenden detaillierten Verfahrensschritten: a) Bereitstellen des aufzubereitenden Wassers über wenigstens einen zweiten Einlass in einem ersten Wasserspeicher; b) Saugen des bereitgestellten Wassers mit einer Pumpe durch eine erste Leitung zwischen einem ersten Auslass des ersten Wasserspeichers und der Pumpe; c) Drücken des angesaugten Wassers mit der Pumpe durch eine zweite Leitung zwischen der Pumpe und einem Venturi-Injektor in ein Venturi-Rohr des Venturi-Injektors und gesteuertes Einsaugen des Fluids zur Ozonierung in den Ozon-Generator sowie Injizieren des in dem Ozon-Generator ozonierten Fluids durch den in dem Venturi-Injektionsrohr des Venturi-Injektors beim Hindurchströmen des aufzubereitenden Wassers durch das Venturi-Rohr des Venturi-Injektors erzeugten Unterdruck. Erfindungsgemäß erfolgt die Ozonierung des Fluids dabei in einem von dem Ozon-Generator umfassten symmetrischen ersten Behälter mittels wenigstens einer im Bereich einer ersten Symmetrieachse des Behälters angeordneten ersten UV-Strahlungsquelle unter Reflektieren der erzeugten UV-Strahlung an der als Reflektor gewellt ausgebildeten Oberfläche der Innenwand des ersten Behälters, zum Zwecke einer Erhöhung der Intensität der reflektierten UV-Strahlung - und mithin der Ozonausbeute - in dem Bereich zwischen der ersten Symmetrieachse und der Innenwand des ersten Behälters. Wird von der wenigstens einen ersten UV-Strahlungsquelle dabei auch die zweite UV-Strahlung emittiert, so erfolgt gleichzeitig in vorteilhafter Weise eine physikalische Desinfektion des ersten Fluids in dem ersten Behälter; d) Weiterleiten des mit dem ozonierten Fluid vermischten Wassers in eine Mischvorrichtung über eine vierte Leitung zwischen dem Venturi-Rohr des Venturi-Injektors und dem Einlass der Mischvorrichtung; e) chemisches Desinfizieren des Wassers in der Mischvorrichtung unter Auflösung des Fluids und des Ozons; f) Weiterleiten des chemisch desinfizierten Wassers und des damit vermischten restlichen Fluids und Ozons über eine fünfte Leitung zwischen dem Auslass der Mischvorrichtung und dem Einlass eines UV-Reaktors; g) physikalisches Desinfizieren des aufzubereitenden Wassers in dem UV-Reaktor mittels der zweiten UV-Strahlung und gleichzeitiges weitergehendes chemisches Desinfizieren des aufzubereitenden Wassers mit den unter Aufspaltung des Restozons mittels der ersten UV-Strahlung in dem UV-Reaktor erzeugten Hydroxyl-Radikalen; h) Rückleiten des aufbereiteten Wassers in den ersten Wasserspeicher über eine sechste Leitung zwischen dem Auslass des UV-Reaktors und einem zweiten Einlass des ersten Wasserspeichers; i) Bereithalten des aufbereiteten Wassers in dem ersten Wasserspeicher unter kontinuierlichem oder diskontinuierlichem Umwälzen zwischen dem zweiten Auslass und dem zweiten Einlass des ersten Wasserspeichers über die erste Leitung, die Pumpe, die zweite Leitung, den Venturi-Injektor, die vierte Leitung, die Mischvorrichtung die fünfte Leitung, den UV-Reaktor und die sechste Leitung in einem ersten Wasserkreislauf für eine Entnahme über einen ersten Auslass des ersten Wasserspeichers.

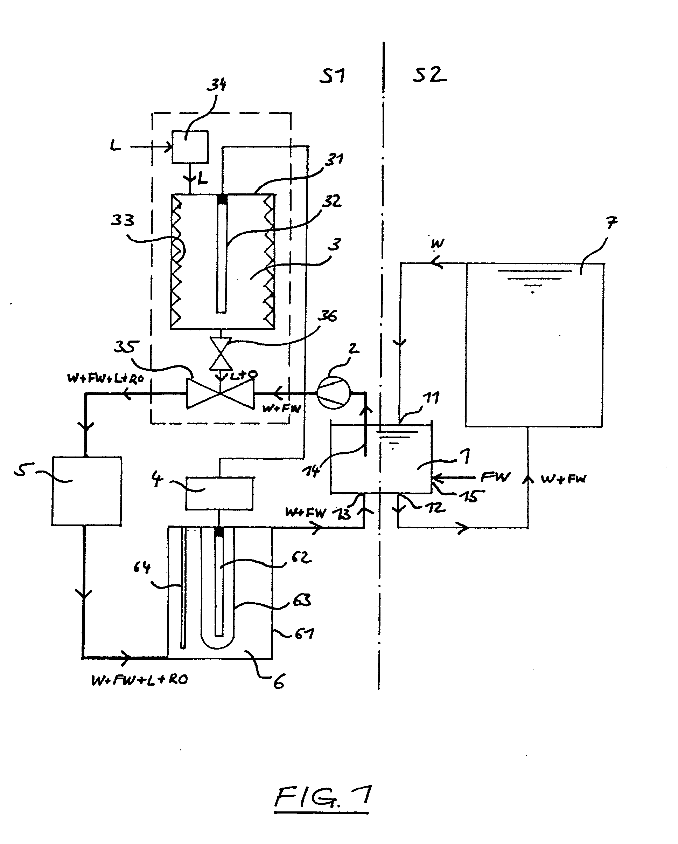

Eine bevorzugte Ausführung der erfindungsgemäßen Anlage ist in der beigefügten Figur 1 wiedergegeben:
- Fig. 1: zeigt in schematischer Darstellung eine Anlage zur Aufbereitung von Wasser einer Badebeckenanlage mit einem Schwallwasserbehälter, einem Ozon-Generator, einer Mischvorrichtung und einem UV-Reaktor in einem ersten Wasserkreislauf sowie ein Badebecken in einen zweiten Wasserkreislauf in fluidmechanischer Kopplung über den Schwallwasserbehälter unter jeweiliger Angabe der Strömungverläufe.

In Fig. 1 ist eine erfindungsgemäße Anlage zur Aufbereitung von Wasser dargestellt, wie sie bevorzugt in öffentlichen oder privaten Bade- oder Schwimmanlagen zur chemischen und physikalischen Desinfektion des abgebadeten Wassers zu Einsatz kommt.

Ein erster Wasserspeicher (1) weist einen ersten Einlass (11) zum Einleiten des aufzubereitenden Wasser (W) aus einem zweiten Wasserspeicher (7) auf. Dieser zweite Wasserspeicher (7) kann beispielsweise ein Bade- oder Schwimmbecken einer öffentlichen Badeoder Schwimmbeckenanlage sein, aus dem das abgebadete Wasser in einen Schwallwasserbehälter abfliest, den in diesem Fall der erste Wasserspeicher (1) bildet. Ein dritter Einlass (15) des ersten Wasserspeichers (1) ist zum Zuleiten von Frischwasser (FW) vorgesehen. Das Wasser (W) aus dem zweiten Wasserspeicher (7) und das Frischwasser (FW) können so unabhängig von dem zweiten Wasserspeicher (7) einer Aufbereitung unterzogen werden. Zur Weiterleitung des aufzubereitenden Wassers (W+FW) ist ein zweiter Auslass (14) in dem ersten Wasserspeicher (1) vorgesehen. Dieser ist über eine erste Leitung mit einer Pumpe (2) und weiter über eine zweite Leitung mit dem Venturi-Rohr eines Venturi-Injektors (35) verbunden. Wird mittels der Pumpe (2) Wasser aus dem ersten Wasserspeicher (1) durch das Venturi-Rohr des Venturi-Injektors (35) gedrückt, entsteht in dem Venturi-Injektionsrohr des Venturi-Injektors (35) ein Unterdruck.

Das Venturi-Rohr des Venturi-Injektors (35) ist über eine dritte Leitung mit dem Auslass des Ozon-Generators (3) verbunden, der wiederum über einen von ihm umfassten ersten Behälter (31) und dessen Auslass mit einem Luftfilter (34) in Verbindung steht. Somit wird durch den Unterdruck in dem Venturi-Injektionsrohr des Venturi-Injektors (35) ein Einsaugen der Luft (L) in den Ozon-Generator (3) und ein Eintrag der in dem Ozon-Generator (3) ozonierten Luft (L+O) in das aufzubereitende Wasser (W+FW) in dem Venturi-Rohr des Venturi-Injektors (35) ermöglicht.

Der von dem Ozon-Generator (3) umfasste erste Behälter (31) ist zylinderförmig mit einer Einlassöffnung an der ersten Stirnseite und einer Auslassöffnung an der zweiten Stirnseite für das Hindurchleiten der gefilterten Umgebungsluft (L) ausgebildet und weist eine erste UV-Strahlungsquelle (32), die sich zwischen der ersten und zweiten Stirnseite in einem Bereich entlang der Zylinderlängsachse erstreckt, zur Erzeugung einer bispektralen UV-Strahlung mit einer Wellenlänge von etwa 185 nm für die Bildung von Ozon (O) durch Ozonierung der eingesaugten gefilterten Umgebungsluft (L) und mit einer Wellenlänge von etwa 254 nm für die gleichzeitige physikalische Desinfektion der gefilterten Umgebungsluft (L) in dem ersten Behälter (31) auf. Die Innenwand des ersten Behälters (31) ist als Reflektor (33) zum Reflektieren der erzeugten UV-Strahlung mit einer gewellten Oberfläche aus poliertem Aluminium zur Erhöhung der Intensität der reflektierten UV-Strahlung in dem Bereich zwischen der Zylinderlängsachse und der Innenwand des ersten Behälters (31) in orthogonaler Orientierung zu der Zylinderlängsachse ausgebildet. Die Ozonausbeute nimmt mit der Strahlungsintensität zu. In der dritten Leitung zwischen dem Ozon-Generator (3) und dem Venturi-Injektionsrohr des Venturi-Injektors (35) ist ein Steuerventil (36) in Form eines Kunststoffabsperrhahns vorgesehen, mit dem die Zufuhr des ozonierten Luftvolumens in das aufzubereitende Wasser (W+FW) zwischen 25 und 100 % einstellbar ist.

Das Venturi-Rohr des Venturi-Injektors (35) ist weiter über eine vierte Leitung mit einer Mischvorrichtung (5) in Form eines Reaktionsfasses verbunden. Das Reaktionsfass weist eine wirksame Reaktionsstrecke von etwa 3 m auf, innerhalb der die chemische Desinfektion des Wassers (W+FW) unter Einwirkung der ozonierten Luft (L+O) erfolgt. Der Auslass der Mischvorrichtung (5) ist über eine fünfte Leitung mit dem Einlass des UV-Reaktors (6) verbunden. Dieser umfasst einen zweiten Behälter (61) in Zylinderform mit einem sich entlang der Zylinderlängsachse erstreckenden Quarz-Tauchrohr (63), von dem zentrisch eine langgestreckte zweite UV-Strahlungsquelle (62) wasserdicht umschlossen ist. Weiter ist in dem zweiten Behälter (61) parallel zu dem Quarz-Tauchrohr (63) ein Metallkatalysator (64) in Form eines dünnen Titanstabes angeordnet. Dieser dient zur Umwandlung des in dem aufzubereitenden Wasser (W+FW+L+RO) enthaltenen Restozons (RO) in Wasserstoffperoxid und verbessert damit die weitergehende chemische Desinfektion innerhalb des UV-Reaktors unter Vermeidung eines Restozonaustrags aus dem UV-Reaktor (6).

Die erste UV-Strahlungsquelle (32) in dem Ozon-Generator (3) und die zweite UV-Strahlungsquelle (62) in dem UV-Reaktor (6) sind zur Ansteuerung elektrisch mit einer gemeinsamen Ansteuereinheit (4) konventioneller Bauart verbunden.

Der Auslass des UV-Reaktors (6) ist über eine sechste Leitung mit dem zweiten Einlass (13) des ersten Wasserspeichers (1) verbunden, wodurch ein kontinuierliches oder diskontinuierliches Umwälzen des Wassers (W+FW) zwischen dem zweiten Auslass (14) und dem zweiten Einlass (13) des ersten Wasserspeichers (1) über die erste Leitung, die Pumpe (2), die zweite Leitung, den Venturi-Injektor (35), die vierte Leitung, die Mischvorrichtung (5), die fünfte Leitung, den UV-Reaktor (6) und die sechste Leitung in einem ersten Wasserkreislauf (S1) ermöglicht wird. Über den ersten Auslass (12) in dem ersten Wasserspeicher (1) ist das aufbereitete Wasser (W+FW) schließlich dem zweiten Wasserspeicher (7) zuführbar.

### Bezugszeichenliste:

- 1: erster Wasserspeicher
- 11: erster Einlass
- 12: erster Auslass
- 13: zweiter Einlass
- 14: zweiter Auslass
- 15: dritter Einlass
- 2: Pumpe
- 3: Ozon-Generator
- 31: erster Behälter
- 32: erste UV-Strahlungsquelle
- 33: UV-Reflektor
- 34: Luftfilter
- 35: Venturi-Injektor
- 36: Steuerventil
- 4: Ansteuereinheit
- 5: Mischvorrichtung
- 6: UV-Reaktor
- 61: zweiter Behälter
- 62: zweite UV-Strahlungsquelle
- 63: Quarz-Tauchrohr
- 64: Metallkatalysator
- 7: zweiter Wasserspeicher
- S1: erster Wasserkreislauf
- S2: zweiter Wasserkreislauf
- W: Wasser
- FW: Frischwasser
- L: Fluid
- O: Ozon
- RO: Restozon

## Patentansprüche

1. Anlage zur Aufbereitung von Wasser (W) mit einem Ozon-Generator (3) zur Erzeugung von Ozon (O) durch Ozonierung eines Fluids (L), insbesondere Luft oder Sauerstoff, mittels einer ersten UV-Strahlung zur chemischen Desinfektion des Wassers und einem UV-Reaktor (6) zur physikalischen Desinfektion des Wassers mittels einer zweiten UV-Strahlung, **dadurch gekennzeichnet, dass** eine Pumpe (2) und ein Venturi-Injektor (35) mit einem Venturi-Rohr zum Durchleiten des aufzubereitenden Wassers (W) und einem Venturi-Injektionsrohr zum gesteuerten Injizieren des in dem Ozon-Generator (3) ozonierten Fluids (L+O) in das durchgeleitete Wasser in Strömungsrichtung vor dem UV-Reaktor (6) vorgesehen sind, wobei die Pumpe (2) zum Drücken des aufzubereitenden Wassers durch das Venturi-Rohr des Venturi-Injektors (35) ausgebildet ist, wobei der Ozon-Generator (3) einen Reflektor (33) zum Reflektieren der erzeugten UV-Strahlung mit einer gewellten Oberfläche zur Erhöhung der Intensität der reflektierten UV-Strahlung für die Ozonierung des Fluids (L) umfasst und wobei der UV-Reaktor (6) zusätzlich zum Erzeugen der ersten UV-Strahlung zur Aufspaltung von Restozon (RO) in Hydroxyl-Radikale für eine weitergehende chemische Desinfektion ausgebildet ist.

2. Anlage gemäß Anspruch 1, **dadurch gekennzeichnet, dass** der Eintrag des in dem Ozon-Generator (3) ozonierten Fluids (L+O) in das aufzubereitende Wasser (W) mit dem Venturi-Injektor (35) mittelbar über die Drehzahl der Pumpe (2) oder zusätzlich unmittelbar über ein zwischen dem Ozon-Generator (3) und dem Venturi-Injektionsrohr des Venturi-Injektors (35) vorgesehenes Steuerventil (36) steuerbar ist.

3. Anlage gemäß Anspruch 1 oder 2, **dadurch gekennzeichnet, dass** der Ozon-Generator (3) einen zylinderförmigen ersten Behälter (31) zum Hindurchleiten des Fluids (L) und wenigstens eine erste UV-Strahlungsquelle (32) zum Erzeugen wenigstens der ersten UV-Strahlung für die Ozonierung des Fluids (L) in dem ersten Behälter (31) umfasst, wobei die oder jede erste UV-Strahlungsquelle (32) im Bereich der Zylinderlängsachse vorgesehen ist und wobei die Innenwand des ersten Behälters (31) als Reflektor (33) mit der gewellten Oberfläche zur Erhöhung der Intensität der reflektierten UV-Strahlung in dem Bereich zwischen der Zylinderlängsachse und der Innenwand des ersten Behälters (31) ausgebildet ist.

4. Anlage gemäß mindestens einem der Ansprüche 1 bis 3, **dadurch gekennzeichnet, dass** der Ozon-Generator (3) wenigstens eine erste UV-Strahlungsquelle (32) zum Erzeugen der ersten UV-Strahlung mit einer Wellenlänge von etwa 100 bis 200 nm, insbesondere von etwa 185 nm, für die Ozonierung des ersten Fluids (L) oder zusätzlich der zweiten UV-Strahlung mit einer Wellenlänge von etwa 240 bis 280 nm, insbesondere von etwa 254 nm, für eine gleichzeitige physikalische Desinfektion des ersten Fluids (L) aufweist.

5. Anlage gemäß mindestens einem der Ansprüche 1 bis 4, **dadurch gekennzeichnet, dass** durch die gewellte Ausbildung die Oberfläche des von dem Ozon-Generator (3) umfassten Reflektors (33) um den Faktor 1,5 bis 2,5 zur Erhöhung der Intensität der reflektierten UV-Strahlung für die Ozonierung des Fluids (L) vergrößert ist und dass die gewellte Oberfläche des Reflektors (33) in Form von geraden Wellen mit gerundeten oder spitz zulaufenden Wellentälern und Wellenbergen ausgebildet ist.

6. Anlage gemäß mindestens einem der Ansprüche 1 bis 5, **dadurch gekennzeichnet, dass** die gewellte Oberfläche des von dem Ozon-Generator (3) umfassten Reflektors (33) zum Reflektieren der UV-Strahlung Aluminium, insbesondere poliertes Aluminium, aufweist.

7. Anlage gemäß mindestens einem der Ansprüche 1 bis 6, **dadurch gekennzeichnet, dass** eine Mischvorrichtung (5) mit einer wirksamen Reaktionsstrecke von zumindest etwa 2,20 m, bevorzugt wenigstens etwa 2,30 m, für ein weitergehendes Vermischen unter chemischem Desinfizieren des aufzubereitenden Wassers (W) mit dem ozonierten Fluid (L+O) in Strömungsrichtung zwischen dem Venturi-Injektor (35) und dem UV-Reaktor (6) vorgesehen ist, wobei die Mischvorrichtung (5) in Form eines Reaktionsrohres oder eines Reaktionsfasses ausgebildet ist.

8. Anlage gemäß mindestens einem der Ansprüche 1 bis 7, **dadurch gekennzeichnet, dass** der UV-Reaktor (6) als Dünnschicht-UV-Reaktor mit einem zylindrischen zweiten Behälter (61) und mit wenigstens einer zweiten UV-Strahlungsquelle (62) in einem Quarz-Tauchrohr (63) innerhalb des zweiten Behälters (61) ausgebildet ist, wobei das Quarz-Tauchrohr (63) und der zweite Behälter (61) konzentrisch und mit geringem Abstand zum Hindurchleiten des aufzubereitenden Wassers (W) in einer dünnen Schicht für eine verbesserte physikalische Desinfektion angeordnet sind und wobei die oder jede in dem UV-Reaktor (6) vorgesehene zweite UV-Strahlungsquelle (62) zum Erzeugen der zweiten UV-Strahlung mit einer Wellenlänge von etwa 240 bis 280 nm, insbesondere von etwa 254 nm, zur physikalischen Desinfektion und der ersten UV-Strahlung mit einer Wellenlänge von etwa 100 bis 200 nm, insbesondere von etwa 185 nm, zur Aufspaltung von Restozon (RO) in Hydroxyl-Radikale für eine gleichzeitige weitergehende chemische Desinfektion des aufzubereitenden Wassers (W) vorgesehen ist.

9. Anlage gemäß mindestens einem der Ansprüche 1 bis 8, **dadurch gekennzeichnet, dass** der UV-Reaktor (6) einen Metallkatalysator (64), insbesondere ein Titan- oder Titandioxyd-Katalysator, zur Verstärkung der gleichzeitigen weitergehenden chemischen Desinfektion des Wassers durch zusätzliche Umwandlung des Restozons (RO) in Wasserstoffperoxid aufweist.

10. Anlage gemäß mindestens einem der Ansprüche 1 bis 9, **dadurch gekennzeichnet, dass** für die Erzeugung der ersten UV-Strahlung mit einer Wellenlänge von etwa 100 bis 200 nm, insbesondere von etwa 185 nm, und der zweiten UV-Strahlung mit einer Wellenlänge von etwa 240 bis 280 nm, insbesondere von etwa 254 nm, in dem Ozon-Generator (3) und in dem UV-Reaktor (6) eine gemeinsame Ansteuereinheit (4) vorgesehen ist.

11. Anlage gemäß mindestens einem der Ansprüche 1 bis 10, **dadurch gekennzeichnet, dass** ein erster Wasserspeicher (1) zum Bereitstellen des aufzubereitenden Wassers (W) und zum Speichern des aufbereiteten Wassers mit einem zweiten Auslass (14), einem zweiten Einlass (13) und einem dritten Einlass (15) vorgesehen ist, wobei der erste Wasserspeicher (1) über den zweiten Auslass (14) mit der Pumpe (2) und über den zweiten Einlass (13) mit dem UV-Reaktor (6) unter Ausbildung eines ersten Wasserkreislaufs (S1) verbunden ist und wobei der dritte Einlass (15) zur Zufuhr von Frischwasser (FW) in den ersten Wasserkreislauf (S1) vorgesehen ist.

12. Verfahren zur Aufbereitung von Wasser (W) mit einem Ozon-Generator (3) zur Erzeugung von Ozon (O) durch Ozonierung eines Fluids (L), insbesondere Luft oder Sauerstoff, mittels einer ersten UV-Strahlung zur chemischen Desinfektion des Wassers und einem UV-Reaktor (6) zur physikalischen Desinfektion des Wassers mittels einer zweiten UV-Strahlung, **dadurch gekennzeichnet, dass** das Verfahren unter Verwendung eines Reflektors (33) zum Reflektieren der erzeugten UV-Strahlung mit einer gewellten Oberfläche in dem Ozon-Generator (3) zur Erhöhung der Intensität der reflektierten UV-Strahlung für die Ozonierung des Fluids (L), einer Pumpe (2) und eines Venturi-Injektors (35) mit einem Venturi-Rohr zum Durchleiten des aufzubereitenden Wassers (W) und einem Venturi-Injektionsrohr zum gesteuerten Injizieren des in dem Ozon-Generator (3) ozonierten Fluids (L+O) in das durchgeleitete aufzubereitende Wasser (W) in Strömungsrichtung vor dem UV-Reaktor (6) durchgeführt wird und die Verfahrensschritte aufweist:
a) Drücken des aufzubereitenden Wassers (W) durch das Venturi-Rohr des Venturi-Injektors (35) mit der Pumpe (2) und gesteuertes Injizieren des in dem Ozon-Generator (3) gleichzeitig unter Verwendung des Reflektors (33) mit der gewellten Oberfläche erzeugten ozonierten Fluids (L+O) mit dem Venturi-Injektionsrohr des Venturi-Injektors (35) in das aufzubereitende Wasser (W);
b) Weiterleiten des mit dem ozonierten Fluid vermischten Wassers (W+L+O) von dem Venturi-Injektor (35) zu dem UV-Reaktor (6) unter chemischem Desinfizieren des aufzubereitenden Wassers (W) mit dem ozonierten Fluid (L+O);
c) physikalisches Desinfizieren des aufzubereitenden Wassers (W) in dem UV-Reaktor (6) mittels der zweiten UV-Strahlung und gleichzeitige Aufspaltung des Restozons (RO) in Hydroxyl-Radikale mittels der ersten UV-Strahlung sowie weitergehendes chemisches Desinfizieren des aufzubereitenden Wassers (W) in dem UV-Reaktor (6).

13. Verfahren gemäß Anspruch 12, **dadurch gekennzeichnet, dass** der Eintrag des in dem Ozon-Generator (3) ozonierten Fluids (L+O) in das aufzubereitende Wasser (W) mit dem Venturi-Injektor (35) mittelbar über die Drehzahl der Pumpe (2) oder zusätzlich unmittelbar über ein in der zwischen dem Ozon-Generator (3) und dem Venturi-Injektionsrohr des Venturi-Injektors (35) vorgesehenes Steuerventil (36) gesteuert wird.

14. Verfahren gemäß Anspruch 12 oder 13, **dadurch gekennzeichnet, dass** die erste UV-Strahlung mit einer Wellenlänge von etwa 100 bis 200 nm, insbesondere von etwa 185 nm, und die zweite UV-Strahlung mit einer Wellenlänge von etwa 240 bis 280 nm, insbesondere von etwa 254 nm, mit wenigstens einer ersten UV-Strahlungsquelle (32) in dem Ozon-Generator (3) und mit wenigstens einer zweiten UV-Strahlungsquelle (62) in dem UV-Reaktor (6) unter Verwendung einer gemeinsamen Ansteuereinheit (4) erzeugt werden.

15. Verfahren gemäß mindestens einem der Ansprüche 12 bis 14, **dadurch gekennzeichnet, dass** Verfahrensschritt c) unter Verwendung eines Metallkatalysators (64), insbesondere eines Titan- oder Titandioxyd-Katalysators, zur Verstärkung der gleichzeitigen weitergehenden chemischen Desinfektion des Wassers durch zusätzliche Umwandlung des Restozons (RO) in Wasserstoffperoxid durchgeführt wird.
